# EUROPÄISCHE PATENTSCHRIFT

(11) **EP 3 909 799 B1**
(45) Veröffentlichungstag und Bekanntmachung des Hinweises auf die Patenterteilung: **27.11.2024**
(21) Anmeldenummer: 21162066.1
(22) Anmeldetag: 11.03.2021
(51) Int. Cl.: B60K 23/08, B60K 7/00, B60K 17/10, B60K 17/356, B62D 11/04, B62D 11/06, B62D 11/18

(54) **LENKWINKELABHÄNGIGE DREHMOMENTVERTEILUNG**
TORQUE DISTRIBUTION DEPENDING ON STEERING ANGLE
RÉPARTITION DU COUPLE EN FONCTION DE L'ANGLE DE DIRECTION

(30) Priorität: 13.05.2020 DE 102020112948
(43) Veröffentlichungstag der Anmeldung: 17.11.2021
(73) Patentinhaber: CLAAS Selbstfahrende Erntemaschinen GmbH, 33428 Harsewinkel (DE)
(72) Erfinder: Silies, Andreas, 48488 Emsbüren (DE); Gersmann, Manfred, 48231 Warendorf (DE)
(74) Vertreter: CLAAS Gruppe

(56) Entgegenhaltungen:
- EP-A1- 3 689 660
- EP-A2- 0 314 389
- EP-A2- 1 364 824
- DE-A1- 102007 030 168
- DE-A1- 102010 009 665

## Beschreibung

Die Erfindung betrifft eine elektronische Steuerungseinrichtung einer Antriebseinheit eines als selbstfahrende landwirtschaftliche Erntemaschine mit Allradantrieb ausgebildeten Fahrzeugs gemäß dem Oberbegriff des Anspruchs 1.

Selbstfahrende landwirtschaftliche Erntemaschinen, wie etwa ein sogenannter Feldhäcksler oder ein Mähdrescher, sind in aller Regel mit einem Allradantrieb ausgestattet. Ein Hauptmotor generiert ein Antriebsdrehmoment, welches anteilig den Bodeneingriffsmitteln der Vorderachse und den Bodeneingriffsmitteln der Hinterachse zugeführt wird. Derartige Bodeneingriffsmitteln können entweder als Raupenlaufwerke, Räder oder einer Kombination von Rädern und Raupenlaufwerken ausgebildet sein. Bedingt durch einer an der Vorderachse anliegenden größeren Achslast übertragen insbesondere die eingangs genannten selbstfahrenden landwirtschaftlichen Erntemaschinen einen Großteil des Antriebsdrehmoments mittels den an der Vorderachse befindlichen Bodeneingriffsmittel auf den Boden, sodass die an der Vorderachse angeordneten Reifen einen deutlich größeren Durchmesser als die Hinterreifen aufweisen oder als Raupenlaufwerke ausgebildet sind. Für einen Lenkvorgang wird bei derartig ausgebildeten Fahrzeugen an den Rädern der Hinterachse ein Lenkwinkel eingestellt, während die Bodeneingriffsmittel der Vorderachse im Wesentlichen starr angeordnet sind.

Der Stand der Technik offenbart eine Vielzahl von verschiedenartig eingerichteten Steuereinrichtungen, welche die Bodeneingriffsmittel in Abhängigkeit von dynamischen und statischen Fahrzeugparametern ansteuern. Aus der DE 10 2007 030 168 A1 ist eine elektronische Steuereinrichtung zur Ansteuerung der Antriebsmittel von Bodeneingriffsmitteln eines als selbstfahrende landwirtschaftliche Arbeitsmaschine ausgebildeten Fahrzeugs bekannt geworden. Diese ermittelt anhand dynamischer und statischer Fahrzeugparameter ein maximal zulässiges Raddrehmoment, welches der Optimierung der Traktion und Verhinderung von Schlupf dient. Das ermittelte zulässige Raddrehmoment begrenzt die einsatzabhängige Vorgabe eines Schluckvolumens an den Hydraulikmotoren, welche zum Antrieb der Räder verwendet werden. Primär verwendet die aus der DE 10 2007 030 168 A1 bekannt gewordene Steuerungseinrichtung eine aus verschiedenen Parametern berechnete Achslast der Räder, auf dessen Grundlage die Hydraulikmotoren mit einem entsprechenden Schluckvolumen angesteuert werden.

Bei einer Kurvenfahrt beschreibt die Hinterachse mit den eingelenkten Rädern einen größeren Kurvenradius als die Vorderachse. Hierbei übertragen die Bodeneingriffsmittel der Hinterachse im Wesentlichen das gleiche Antriebsdrehmoment auf den Boden wie bei einer Geradeausfahrt. Während einer Kurvenfahrt sieht der Stand der Technik lediglich in Extremsituationen, wie beispielsweise einem Über- oder Untersteuern, und bei Schlupf eine Änderung des Antriebsdrehmoments zwischen den linken und rechten Antriebsrädern vor. In aller Regel werden Fahrzeuge, insbesondere selbstfahrende landwirtschaftliche Erntemaschinen, bei Kurvenfahrt nicht unter Volllast gefahren, sodass Schlupf sowie ein Über- oder Untersteuern selten auftritt. Insbesondere beim Vorgewende im Erntebetrieb ist ein Fahren unter Volllast selten möglich.

Hier zeigt sich ein Nachteil des Standes der Technik auf, da dieser bei einer Kurvenfahrt ein unverändertes, im Wesentlichen starres Verhältnis zwischen dem der Vorderachse und der Hinterachse zugeführten Antriebsdrehmoment vorsieht. Dies führt dazu, dass eine mit einfachen Mitteln erreichbare potentielle Minimierung des Wendekreises eines mit Hinterachslenkung versehenen Fahrzeugs nicht erreicht wird.

Es ist Aufgabe der Erfindung die beschriebenen Nachteile des Stands der Technik zu vermeiden und insbesondere eine selbstfahrende landwirtschaftliche Erntemaschine zu schaffen, bei welcher die Lenkcharakteristik verbessert wird, indem das Verhältnis des von den Bodeneingriffsmitteln der Vorderachse und der Hinterachse auf den Boden übertragenen Antriebsdrehmoment optimiert wird.

Diese Aufgabe wird erfindungsgemäß durch eine elektronische Steuerungseinrichtung mit den Merkmalen des Anspruchs 1 gelöst.

Die erfindungsgemäße Ansteuerung der Antriebseinheit mittels der elektronischen Steuereinrichtung ermöglicht auf einfache Art und Weise den Wendekreis einer mit einem Allradantrieb ausgestatteten selbstfahrenden landwirtschaftlichen Erntemaschine zu reduzieren. Indem das auf den Boden übertragene Antriebsdrehmoment von den an der Hinterachse angeordneten Bodeneingriffsmittel bei einer Kurvenfahrt erhöht wird, schiebt das Fahrzeug in die Kurve hinein. Weiterhin wird ein drehen des Fahrzeugs um eine sich vertikal erstreckende Achse gefördert, sodass sich der Kurvenradius bei einer Kurvenfahrt verringert.

In einer vorteilhaften Weiterbildung kann die Antriebseinheit eine Hydraulikpumpe umfassen, wobei die Vorderachse und die Hinterachse jeweils zumindest ein als Hydraulikmotor ausgebildetes Antriebsmittel aufweisen, welches die der jeweiligen Achse zugeordneten Bodeneingriffsmittel antreibt, wobei vorzugsweise jedes Bodeneingriffsmittel jeweils einen diesem zugeordneten Hydraulikmotor aufweist. Diese vorteilhafte Weiterbildung ermöglicht es auf einfache Art und Weise das Verhältnis des Antriebsmoments zwischen den Bodeneingriffsmitteln entsprechend anzupassen.

Vorteilhafterweise können die Bodeneingriffsmittel als Räder ausgebildet sein, da diese kostengünstige Mittel zur Übertragung des Antriebsdrehmoments auf den Boden darstellen.

Eine besonders vorteilhafte Ausgestaltung sieht vor, dass die Bodeneingriffsmittel der Hinterachse als Räder und die Bodeneingriffsmittel der Vorderachse als Raupenlaufwerke ausgebildet sind. Hier findet die Erfindung einen besonders vorteilhaften Anwendungsfall, da Raupenlaufwerke einen hohen Drehwiderstand aufweisen, welche einer für die Kurvenfahrt erforderlichen Drehbewegung um eine sich vertikal erstreckende Achse entgegenwirkt. Eine erfindungsgemäße Anpassung des Verhältnisses des Antriebsdrehmoments, wobei das Antriebsdrehmoment der hinteren, als Räder ausgestalteten und bei einer Kurvenfahrt eingelenkten Bodeneingriffsmittel erhöht wird, führt nun dazu, dass zum Drehen der Raupenlaufwerke um ihre vertikale Achse eine erhöhte Kraft generiert wird und somit sich der Kurvenradius reduziert.

Eine weitere vorteilhafte Ausgestaltung sieht vor, dass die Anpassung des Verhältnisses zwischen dem von den Bodeneingriffsmitteln der Vorderachse und dem von den Bodeneingriffsmitteln der Hinterachse auf den Boden übertragenen Antriebsdrehmoment stufenlos erfolgt. Eine stufenlose Anpassung stellt für den Fahrer einen komfortablen Betrieb des Fahrzeugs sicher.

Erfindungsgemäß steuert die elektronische Steuerungseinrichtung die Antriebsmittel derart an, dass ein Anstieg des Lenkwinkels, insbesondere ein Anstieg gegenüber 0 Grad, zu einer Erhöhung des von den Bodeneingriffsmitteln der Hinterachse auf den Boden übertragenen Antriebsdrehmoments und vorzugsweise zu einer Absenkung des von den Bodeneingriffsmitteln der Vorderachse auf den Boden übertragenen Antriebsdrehmoments führt. Die Erhöhung des von den Bodeneingriffsmitteln der Hinterachse auf den Boden übertragenen Antriebsdrehmoments führt zu der gewünschten Reduzierung des Kurvenradius. Durch eine gleichzeitige Absenkung des von den Bodeneingriffsmitteln der Vorderachse auf den Boden übertragenen Antriebsdrehmoments kann die Kurvenfahrt ohne eine Veränderung der Geschwindigkeit fortgesetzt werden.

Vorzugsweise kann die elektronische Steuerungseinrichtung zur weiteren Reduzierung des Kurvenradius die Antriebseinheit derart ansteuern, so dass bei einer Kurvenfahrt das von den Bodeneingriffsmitteln der Hinterachse auf den Boden übertragene Antriebsdrehmoment größer als das von den Bodeneingriffsmitteln der Vorderachse auf den Boden übertragene Antriebsdrehmoment sein kann.

Um auf einfache Art und Weise die Anpassung des Verhältnisses des von den Bodeneingriffsmitteln der Vorderachse und Hinterachse auf den Boden übertragenen Antriebsdrehmoments zu erreichen, kann die Anpassung durch eine Schluckvolumenvorgabe an den Hydraulikmotoren erfolgen.

Erfindungsgemäß weist das Fahrzeug eine Hinterachslenkung auf, damit bei einer Kurvenfahrt die eingelenkten hinteren Bodeneingriffsmittel zum Drehen des Fahrzeugs um eine vertikale Fahrzeugachse führen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung einer Ausführungsform einer Antriebseinheit einer selbstfahrenden landwirtschaftlichen Erntemaschine mit einer erfindungsgemäßen elektronischen Steuerungseinrichtung für die hydraulischen Antriebseinheiten des Fahrantriebes;
- Figur 2: eine schematische Darstellung einer alternativen Ausführungsform der Antriebseinheit der selbstfahrenden landwirtschaftlichen Erntemaschine mit einer erfindungsgemäßen elektronischen Steuerungseinrichtung;
- Figur 3: einen beispielhaften Verlauf der Schluckvolumina der den Bodeneingriffsmitteln der Vorderachse und den Bodeneingriffsmitteln der Hinterachse zugeordneten Hydraulikmotoren.

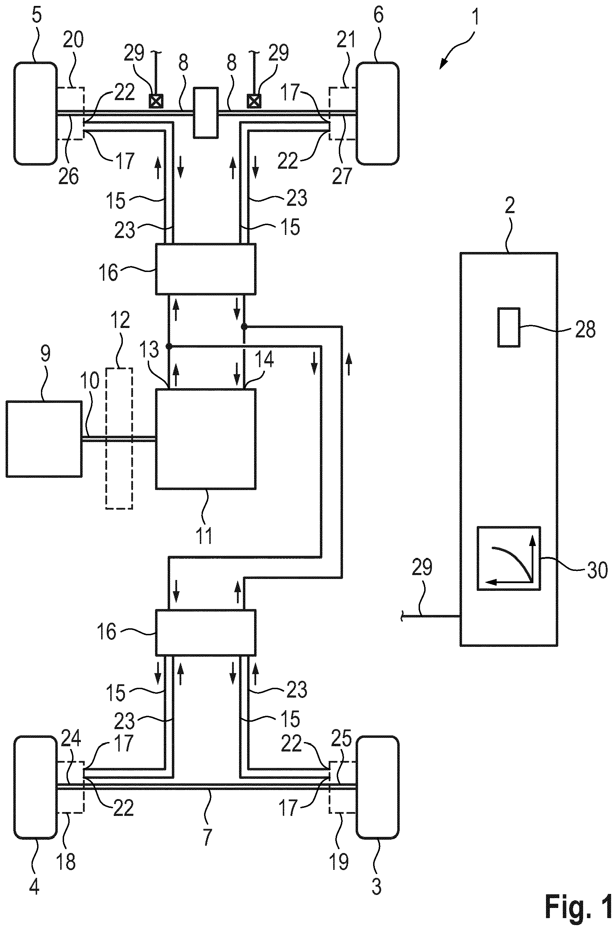

Die Fig. 1 zeigt in schematischer Darstellung eine Ausführungsform einer Antriebseinheit einer selbstfahrenden landwirtschaftlichen Erntemaschine 1 mit einer erfindungsgemäßen elektronischen Steuerungseinrichtung 2 für die hydraulischen Antriebseinheiten des Fahrantriebes. Die Erntemaschine 1 weist einen (nicht dargestellten) Rahmen oder ein selbsttragendes Chassis auf, der sich auf vorderen Bodeneingriffsmitteln 3, 4 und hinteren Bodeneingriffsmitteln 5, 6 abstützt, die sich im Eingriff mit dem Boden befinden und als Räder ausgebildet sind. Die Bodeneingriffsmittel 3, 4, 5, 6 übertragen die auf diese wirkenden Antriebsdrehmomente auf den Boden. Die in aller Regel als Räder ausgebildeten hinteren Bodeneingriffsmitteln 5, 6 sind lenkbar angeordnet, während die in aller Regel als Räder ausgebildeten vorderen Bodeneingriffsmittel 3, 4 einen größeren Reifendurchmesser als die hinteren Räder aufweisen und den größeren Teil des Gewichtes des Fahrzeuges tragen, insbesondere in der Ausführungsform einer Erntemaschine 1, beispielsweise eines Mähdreschers oder Feldhäckslers. Die vorderen Bodeneingriffsmittel 3, 4 einer Erntemaschine 1 können aber auch aus jeweils einem Raupenlaufwerk (nicht dargestellt) bestehen, wobei jeweils ein Laufwerk einem Bodeneingriffsmittel 3, 4 vorne entspricht. Aufgrund der unterschiedlichen Gewichtsverteilung des Fahrzeugs auf die vordere 7 und hintere Achse 8 erfolgt auch eine unterschiedliche Traktion an den vorderen und hinteren Bodeneingriffsmitteln 3, 4, 5, 6. Die an der vorderen Achse 7 angeordneten Bodeneingriffsmittel 3, 4 sind aufgrund der größeren Radlast traktionsunkritischer als die an der hinteren Lenkachse 8 angeordneten Antriebsräder.

Die Antriebseinheit umfasst einen Hauptmotor 9 in Ausführung eines Verbrennungsmotors, vorzugsweise eines Dieselmotors, der verschiedene Gutbearbeitungs- und Fördereinrichtungen und den Fahrantrieb der Erntemaschine 1 antreibt. Der Antrieb der Fahrantriebe erfolgt über eine Welle 10 des Hauptmotors 9 zur Hydraulikpumpe 11, deren Fluidverdrängung durch eine Schwenkscheibe (nicht gezeigt) mechanische Leistung in hydraulische Leistung (Druck × Volumenstrom) umwandelt, wobei die Schwenkscheibe gesteuert werden kann. Auf die Steuerung der Hydraulikpumpe 11 soll hier nicht näher eingegangen werden, weil diese als bekannt vorausgesetzt wird. Zwischen dem Hauptmotor 9 und der Hydraulikpumpe 11 kann sich alternativ noch ein Getriebe 12 (gestrichelt dargestellt) befinden. Die Hydraulikpumpe 11 weist einen Auslass 13 und einen Einlass 14 auf. Der Auslass 13 ist als Zulauf über Hydraulikleitungen 15 und einem Verteiler 16 mit dem Einlass 17 der Hydraulikmotoren 18, 19, 20, 21 verbunden, während der Auslass 22 der Hydraulikmotoren 18, 19, 20, 21 über Hydraulikleitungen 23 als Rücklauf mit dem Einlass 14 der Hydraulikpumpe 11 rückgekoppelt ist. Zwei der Hydraulikmotoren 18, 19 sind an der vorderen Achse 7 angeordnet, wobei jeder Hydraulikmotor 18, 19 über eine Antriebswelle 24, 25 eines der Vorderräder antreibt. Zwei weitere Hydraulikmotoren 20, 21 befinden sich an der Hinterachse 8 und treiben jeweils über eine Antriebswelle 26, 27 ein Hinterrad an.

Die Steuerungseinrichtung 2 ist mit einer Vielzahl von in der Erntemaschine 1 angeordneten Sensoren verbunden, um deren Signale 28 zur Verarbeitung aufzunehmen. Einer dieser Sensoren betrifft einen Lenkwinkelsensor 29, welcher den aktuellen Lenkwinkel 33 an der Hinterachse 8 erfasst. Die lenkbar ausgestaltete Hinterachse 8 ist im dargestellten Ausführungsbeispiel zweigeteilt und als Pendelachse ausgelegt.

Aus dem erfassten Lenkwinkel 33 werden anhand der Steuerungseinrichtung 2 Werte für eine Vorgabe des Antriebsdrehmoments berechnet, woraus zumindest eine Leistungskurven 30 für die Hydraulikmotoren 18, 19, 20, 21 bestimmt wird. Aus der Leistungskurve 30 wird das Schluckvolumen für die Hydraulikmotoren 18, 19, 20, 21 vorgegeben und mittels des Schluckvolumens das Antriebsdrehmoment der Bodeneingriffsmittel 3, 4, 5, 6 eingestellt. Die Steuerung der Schluckvolumenvorgabe erfolgt in an sich bekannter Weise durch Regeln eines (nicht dargestellten) hydraulischen Verstellmotors bzw. einer Schwenkscheibe der Hydraulikmotoren 18, 19, 20, 21. Zur Verstellung der Schwenkscheibe steht eine (nicht dargestellte) Verstelleinrichtung zur Verfügung, welche eine vorgegebene Bewegung von der Steuerungseinrichtung 2 auf die Schwenkscheibe überträgt, wobei die Verstelleinrichtung vorzugsweise aus einem elektromechanischen Aktor bestehen kann. Die Schwenkscheibe der Hydraulikmotoren 18, 19, 20, 21 wird somit über die in der Steuerungseinrichtung 2 enthaltene Leistungskurve 30 gesteuert, wodurch sich ein regelbares Schluckvolumen ergibt.

Erfindungsgemäß ist nun vorgesehen, dass die Steuerungseinrichtung 2 die Werte für die Vorgabe des Antriebsdrehmoments in Abhängigkeit des Lenkwinkels 33 ermittelt. Die Steuerungseinrichtung 2 berechnet die Vorgabe des Antriebsdrehmoments derart, so dass das Verhältnis zwischen dem von den Bodeneingriffsmitteln 3, 4 der Vorderachse 7 auf den Boden übertragenen Antriebsdrehmoment und dem von den Bodeneingriffsmitteln 5, 6 der Hinterachse 8 auf den Boden übertragenen Antriebsdrehmoment in Abhängigkeit des Lenkwinkels 33 geregelt wird.

Im Detail ist die Steuerungseinrichtung 2 derart eingerichtet, so dass diese mit zunehmender Abweichung des Lenkwinkels 33 von 0 Grad für die an der Hinterachse 8 angeordneten Bodeneingriffsmittel 5, 6 ebenfalls eine zunehmend erhöhte Vorgabe des Antriebsdrehmoments ermittelt. Ein Lenkwinkel 33 von 0 Grad entspricht hierbei einen für eine Fahrt in Vorwärtsfahrtrichtung vorgesehenen Lenkwinkel 33. Hingegen verhält sich die Vorgabe des Antriebsdrehmoments für die an der vorderen Achse 7 angeordneten Bodeneingriffsmittel 3, 4 gegensätzlich zu der Vorgabe des Antriebsdrehmoments für die an der Hinterachse 8 angeordneten Bodeneingriffsmittel 5, 6. Die ermittelte Vorgabe des Antriebsdrehmoments für die an der vorderen Achse 7 angeordneten Bodeneingriffsmittel 3, 4 wird mit zunehmender Abweichung des Lenkwinkels 33 von 0 Grad geringer.

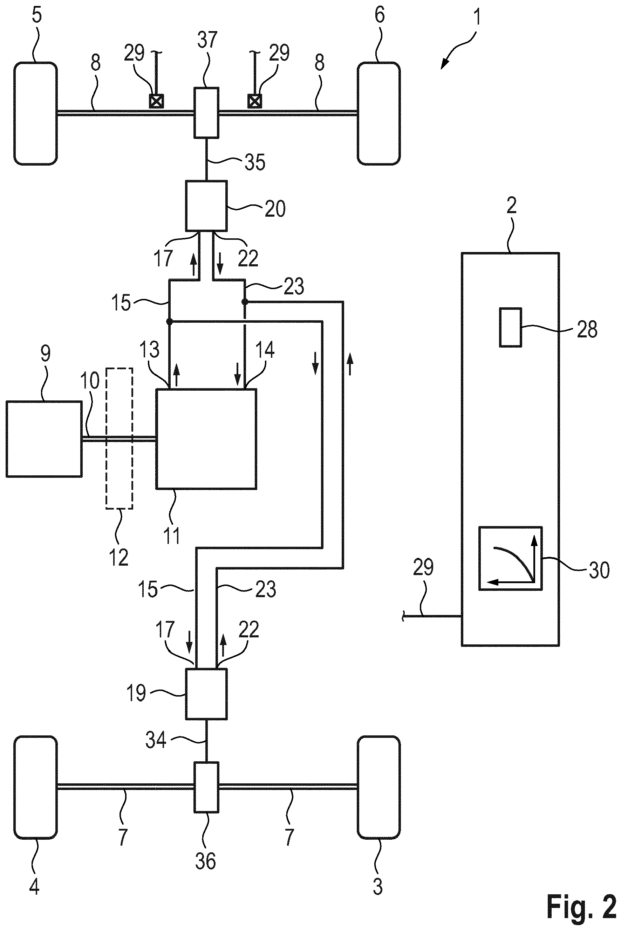

Fig. 2 zeigt eine alternative Ausführungsform der Antriebseinheit der selbstfahrenden landwirtschaftlichen Erntemaschine mit einer erfindungsgemäßen elektronischen Steuerungseinrichtung 2 in einer schematischen Darstellung. Beschreibungen und Angaben zum Fahrantrieb und zur Steuerungseinrichtung 2 die identisch in der Fig. 1 enthalten sind, werden in Fig. 2 nicht wiederholt aufgeführt und sind bei übereinstimmenden Elementen mit denselben Bezugszeichen gekennzeichnet. Der wesentliche Unterschied zum Fahrantrieb aus der Fig. 1 besteht darin, dass der in Fig. 2 gezeigte Allradantrieb nur zwei Hydraulikmotoren 19, 20 umfasst, die jeweils mit einer Antriebswelle 34, 35 ein Differenzialgetriebe 36, 37 antreiben. Der erste Hydraulikmotor 19 treibt über eine erste Antriebswelle 34 und ein erstes selbstsperrendes Differentialgetriebe 36 die beiden vorderen Bodeneingriffsmittel 3, 4 an. Der zweite Hydraulikmotor 20 treibt über eine zweite Antriebswelle 35 und ein zweites selbstsperrendes Differentialgetriebe 37 die beiden hinteren Bodeneingriffsmittel 5, 6 an.

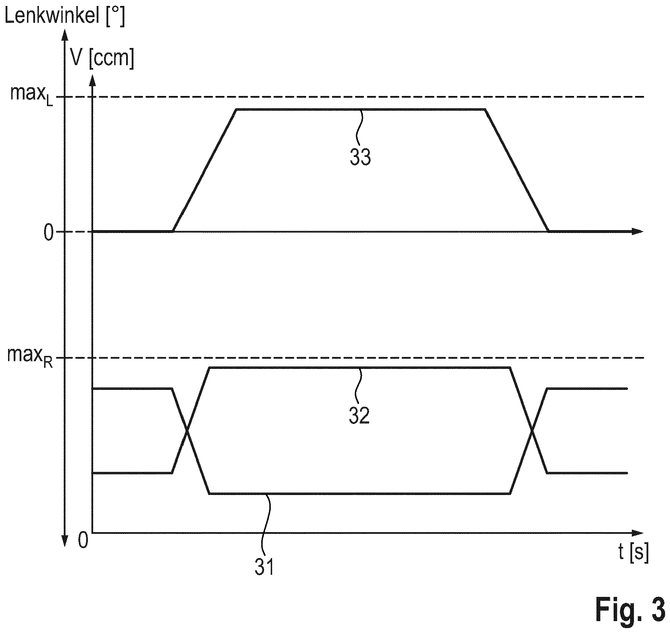

Fig. 3 zeigt einen beispielhaften Verlauf des Schluckvolumens 31 der den Bodeneingriffsmitteln 3, 4 der Vorderachse 7 zugeordneten Hydraulikmotoren 18, 19 und des Schluckvolumens 32 der den Bodeneingriffsmitteln 5, 6 der Hinterachse 8 zugeordneten Hydraulikmotoren 20, 21 in Abhängigkeit des Lenkwinkels 33. Die Angabe max_{L} entspricht den maximal einstellbaren Lenkwinkel 33 für eine Linkskurve und max_{R} den maximal einstellbaren Lenkwinkel 33 für eine Rechtkurve.

Wie Fig. 3 zeigt wird bei einem Lenkwinkel 33 von 0 Grad den der Vorderachse 7 zugeordneten Hydraulikmotoren 18, 19 eine größere Menge an Schluckvolumen 31 zugewiesen als den der Hinterachse 8 zugeordneten Hydraulikmotoren 20, 21. Ein Anstieg des Lenkwinkels 33 führt nun zu einer stufenlosen Veränderung des Verhältnisses zwischen dem umgesetzten Schluckvolumen 31 von den der Vorderachse 7 zugeordneten Hydraulikmotoren 18, 19 und dem umgesetzten Schluckvolumen 32 von den der Hinterachse 8 zugeordneten Hydraulikmotoren 20, 21. Mit ansteigendem Lenkwinkel 33 steigt das von den Hydraulikmotoren 20, 21 der Hinterachse 8 umgesetzte Schluckvolumen 32 an, während das von den Hydraulikmotoren 18, 19 der Vorderachse 7 umgesetzte Schluckvolumen 31 geringer wird.

Übersteigt der Lenkwinkel 33 bei einer Kurvenfahrt einen bestimmten Schwellenwert, wird den zum Antrieb der Bodeneingriffsmittel 5, 6 der Hinterachse 8 verwendeten Hydraulikmotoren 20, 21 eine größere Menge an Schluckvolumen 32 zugewiesen als den zum Antrieb der Bodeneingriffsmittel 3, 4 der Vorderachse 7 verwendeten Hydraulikmotoren 24, 25, so dass die an der Hinterachse 8 angeordneten Bodeneingriffsmittel 5, 6 ein größeres Antriebsdrehmoment auf den Boden übertragen als die an der Vorderachse 7 angeordneten Bodeneingriffsmittel 3, 4. Vorzugsweise liegt ein derartiger Schwellenwert in einem Bereich von 5-10 Grad, weiter vorzugsweise in einem Bereich von 10-15 Grad, weiter vorzugsweise in einem Bereich von 15-20 Grad.

Es sei darauf hingewiesen, dass das insgesamt von den zum Antrieb verwendeten Hydraulikmotoren 18, 19, 20, 21 umgesetzte Schluckvolumen 31, 32 ebenfalls zu oder abnehmen kann, wobei die anteilige Zuweisung zu den zum Antrieb der Bodeneingriffsmittel 3, 4 der Vorderachse 7 verwendeten Hydraulikmotoren 18, 19 und zu den zum Antrieb der Bodeneingriffsmittel 5, 6 der Hinterachse 8 verwendeten Hydraulikmotoren 20, 21 in Abhängigkeit des Lenkwinkels 33 erfolgt. Weiterhin liegt ein abweichender Kurvenverlauf von der in Fig. 3 gezeigten linearen Zunahme bzw. Abnahme des Schluckvolumens, wie beispielsweise eine exponentielle Zunahme bzw. Abnahme des Schluckvolumens 31, 32 in Abhängigkeit des Lenkwinkels 33 ebenfalls im Rahmen der Erfindung.

Selbstverständlich können die aus dem Stand der Technik bekannten Einrichtung wie ABS, VDC, TCS, ASR und ESP sowie die in der DE 10 2007 030 168 A1 offenbarte Einrichtung weiterer Bestandteil der elektronischen Steuerungseinrichtung 2 für die Antriebseinheit des erfindungsgemäß ausgestatten Fahrzeugs sein.

### Bezugszeichenliste:

| | | | |
|---|---|---|---|
| 1 | Erntemaschine | 34 | Antriebswelle |
| 2 | Steuerungseinrichtung | 35 | Antriebswelle |
| 3 | Vorderes Bodeneingriffsmittel | 36 | Differenzialgetriebe |
| 4 | Vorderes Bodeneingriffsmittel | 37 | Differenzialgetriebe |
| 5 | Hinteres Bodeneingriffsmittel | | |
| 6 | Hinteres Bodeneingriffsmittel | | |
| 7 | Vordere Achse | | |
| 8 | Hintere Achse | | |
| 9 | Hauptmotor | | |
| 10 | Welle | | |
| 11 | Hydraulikpumpe | | |
| 12 | Getriebe | | |
| 13 | Auslass (Pumpe) | | |
| 14 | Einlass (Pumpe) | | |
| 15 | Hydraulikleitungen (Zulauf) | | |
| 16 | Verteiler | | |
| 17 | Einlass (Motor) | | |
| 18 | Hydraulikmotor (vorne) | | |
| 19 | Hydraulikmotor (vorne) | | |
| 20 | Hydraulikmotor (hinten) | | |
| 21 | Hydraulikmotor (hinten) | | |
| 22 | Auslass (Motor) | | |
| 23 | Hydraulikleitungen (Rücklauf) | | |
| 24 | Antriebswelle (v. r.) | | |
| 25 | Antriebswelle (v. I.) | | |
| 26 | Antriebswelle (h. r.) | | |
| 27 | Antriebswelle (h. I.) | | |
| 28 | Signale | | |
| 29 | Lenkwinkelsensor | | |
| 30 | Leistungskurve | | |
| 31 | Schluckvolumen (Vorderachse) | | |
| 32 | Schluckvolumen (Hinterachse) | | |
| 33 | Lenkwinkel | | |

## Patentansprüche

1. Elektronische Steuerungseinrichtung (2) einer Antriebseinheit eines als selbstfahrende landwirtschaftliche Erntemaschine (1) mit Allradantrieb ausgebildeten Fahrzeuges zumindest bestehend aus einem Hauptmotor (9), einem Lenkwinkelsensor (29) zur Ermittlung eines Lenkwinkels (33), einer Vorderachse (7) und einer Hinterachse (8) mit jeweils an diesen angeordneten Bodeneingriffsmitteln (3, 4, 5, 6), welche mit einem Boden im Eingriff stehen, wobei das Fahrzeug eine Hinterachslenkung aufweist,
**dadurch gekennzeichnet, dass**
eine Anpassung des Verhältnisses zwischen einem von den Bodeneingriffsmitteln (3, 4) der Vorderachse (7) auf den Boden übertragenen Antriebsdrehmoment und einem von den Bodeneingriffsmitteln (5, 6) der Hinterachse (8) auf den Boden übertragenen Antriebsdrehmoment in Abhängigkeit des Lenkwinkels (33) erfolgt,
wobei die elektronische Steuerungseinrichtung (2) die Antriebsmittel derart ansteuert, so dass ein Anstieg des Lenkwinkels (33), insbesondere ein Anstieg gegenüber 0 Grad, zu einer Erhöhung des von den Bodeneingriffsmitteln (5, 6) der Hinterachse (8) auf den Boden übertragenen Antriebsdrehmoments und vorzugsweise zu einer Absenkung des von den Bodeneingriffsmitteln (3, 4) der Vorderachse (7) auf den Boden übertragenen Antriebsdrehmoments führt.

2. Elektronische Steuerungseinrichtung (2) einer Antriebseinheit eines Fahrzeuges nach Anspruch 1, **dadurch gekennzeichnet, dass** die Antriebseinheit eine Hydraulikpumpe (11) umfasst, wobei die Vorderachse (7) und die Hinterachse (8) jeweils zumindest ein als Hydraulikmotor (18, 19, 20, 21) ausgebildetes Antriebsmittel aufweist, welches die der jeweiligen Achse zugeordneten Bodeneingriffsmittel (3, 4, 5, 6) antreibt, wobei vorzugsweise jedes Bodeneingriffsmittel (3, 4, 5, 6) jeweils einen diesem zugeordneten Hydraulikmotor (18, 19, 20, 21) aufweist.

3. Elektronische Steuerungseinrichtung (2) einer Antriebseinheit eines Fahrzeuges nach einem der Ansprüche 1 oder 2, **dadurch gekennzeichnet, dass** die Bodeneingriffsmittel (3, 4, 5, 6) Räder sind.

4. Elektronische Steuerungseinrichtung (2) einer Antriebseinheit eines Fahrzeuges nach einem der Ansprüche 1 oder 2, **dadurch gekennzeichnet, dass** die Bodeneingriffsmittel (5, 6) der Hinterachse (8) als Räder und die Bodeneingriffsmittel (3, 4) der Vorderachse (7) als Raupenlaufwerke ausgebildet sind.

5. Elektronische Steuerungseinrichtung (2) einer Antriebseinheit eines Fahrzeuges nach einem der Ansprüche 1 bis 4, **dadurch gekennzeichnet, dass** die Anpassung des Verhältnisses zwischen dem von den Bodeneingriffsmitteln (3, 4) der Vorderachse (7) und dem von den Bodeneingriffsmitteln (5, 6) der Hinterachse (8) auf den Boden übertragenen Antriebsdrehmoment stufenlos erfolgt.

6. Elektronische Steuerungseinrichtung (2) einer Antriebseinheit eines Fahrzeuges nach einem der Ansprüche 1 bis 5, **dadurch gekennzeichnet, dass** die elektronische Steuerungseinrichtung (2) die Antriebseinheit derart ansteuert, so dass bei einer Kurvenfahrt das von den Bodeneingriffsmitteln (5, 6) der Hinterachse (8) auf den Boden übertragene Antriebsdrehmoment größer als das von den Bodeneingriffsmitteln (3, 4) der Vorderachse (7) auf den Boden übertragene Antriebsdrehmoment ist.

7. Elektronische Steuerungseinrichtung (2) einer Antriebseinheit eines Fahrzeuges nach einem der Ansprüche 1 bis 6, **dadurch gekennzeichnet, dass** die Anpassung des Verhältnisses durch eine Schluckvolumenvorgabe (31, 32) an den Hydraulikmotoren (18, 19, 20, 21) erfolgt.

## Claims

1. An electronic control device (2) for a drive unit of a vehicle configured as a self-propelled agricultural harvesting machine (1) with all-wheel drive at least consisting of a main engine (9), a steering angle sensor (29) for determining a steering angle (33), a front axle (7) and a rear axle (8) each with ground engaging means (3, 4, 5, 6) disposed thereon, which are engaged with the ground, wherein the vehicle has rear axle steering, **characterized in that**
an adjustment of the relationship between a drive torque transmitted from the ground engaging means (3, 4) of the front axle (7) to the ground and a drive torque transmitted from the ground engaging means (5, 6) of the rear axle (8) to the ground is carried out as a function of the steering angle (33),
wherein the electronic control device (2) controls the drive means in a manner such that an increase in the steering angle (33), in particular an increase with respect to 0 degrees, leads to an increase in the drive torque transmitted from the ground engaging means (5, 6) of the rear axle (8) to the ground and preferably to a decrease in the drive torque transmitted from the ground engaging means (3, 4) of the front axle (7) to the ground.

2. The electronic control device (2) for a drive unit of a vehicle according to claim 1, **characterized in that** the drive unit comprises a hydraulic pump (11), wherein the front axle (7) and the rear axle (8) each have at least one drive means configured as a hydraulic motor (18, 19, 20, 21), which drives the ground engaging means (3, 4, 5, 6) associated with the respective axle, wherein preferably, each ground engaging means (3, 4, 5, 6) has a respective hydraulic motor (18, 19, 20, 21) associated therewith.

3. The electronic control device (2) for a drive unit of a vehicle according to one of claims 1 or 2, **characterized in that** the ground engaging means (3, 4, 5, 6) are wheels.

4. The electronic control device (2) for a drive unit of a vehicle according to one of claims 1 or 2, **characterized in that** the ground engaging means (5, 6) of the rear axle (8) are configured as wheels and the ground engaging means (3, 4) of the front axle (7) are configured as track roller units.

5. The electronic control device (2) for a drive unit of a vehicle according to one of claims 1 to 4, **characterized in that** the adjustment of the relationship between the drive torque transmitted from the ground engaging means (3, 4) of the front axle (7) and the ground engaging means (5, 6) of the rear axle (8) to the ground is carried out in a continuously variable manner.

6. The electronic control device (2) for a drive unit of a vehicle according to one of claims 1 to 5, **characterized in that** the electronic control device (2) controls the drive unit in a manner such that when turning a corner, the drive torque transmitted from the ground engaging means (5, 6) of the rear axle (8) to the ground is greater than the drive torque transmitted from the ground engaging means (3, 4) of the front axle (7) to the ground.

7. The electronic control device (2) for a drive unit of a vehicle according to one of claims 1 to 6, **characterized in that** the adjustment of the relationship is carried out by specifying a displacement volume (31, 32) to the hydraulic motors (18, 19, 20, 21).

## Revendications

1. Dispositif de commande (2) électronique d'une unité d'entraînement d'un véhicule réalisé comme machine de récolte agricole (1) automotrice à transmission intégrale, constitué au moins d'un moteur principal (9), d'un capteur d'angle de braquage (29) pour déterminer un angle de braquage (33), d'un essieu avant (7) et d'un essieu arrière (8) comportant chacun des moyens de prise au sol (3, 4, 5, 6) qui sont disposés sur ceux-ci et qui sont en prise avec un sol, le véhicule présentant une direction d'essieu arrière,
**caractérisé en ce que**
une adaptation du rapport entre un couple d'entraînement transmis au sol par les moyens de prise au sol (3, 4) de l'essieu avant (7) et un couple d'entraînement transmis au sol par les moyens de prise au sol (5, 6) de l'essieu arrière (8) est effectuée en fonction de l'angle de braquage (33),
le dispositif de commande (2) électronique commandant les moyens d'entraînement de manière à ce qu'une augmentation de l'angle de braquage (33), notamment une augmentation par rapport à 0 degré, engendre une augmentation du couple d'entraînement transmis au sol par les moyens de prise au sol (5, 6) de l'essieu arrière (8), et de préférence un abaissement du couple d'entraînement transmis au sol par les moyens de prise au sol (3, 4) de l'essieu avant (7).

2. Dispositif de commande (2) électronique d'une unité d'entraînement d'un véhicule selon la revendication 1, **caractérisé en ce que** l'unité d'entraînement comprend une pompe hydraulique (11), l'essieu avant (7) et l'essieu arrière (8) présentant chacun au moins un moyen d'entraînement qui est réalisé sous forme de moteur hydraulique (18, 19, 20, 21) et entraîne les moyens de prise au sol (3, 4, 5, 6) associés à l'essieu respectif, chaque moyen de prise au sol (3, 4, 5, 6) comprenant de préférence un moteur hydraulique (18, 19, 20, 21) associé à celui-ci.

3. Dispositif de commande (2) électronique d'une unité d'entraînement d'un véhicule selon une des revendications 1 ou 2, **caractérisé en ce que** les moyens de prise au sol (3, 4, 5, 6) sont des roues.

4. Dispositif de commande (2) électronique d'une unité d'entraînement d'un véhicule selon une des revendications 1 ou 2, **caractérisé en ce que** les moyens de prise au sol (5, 6) de l'essieu arrière (8) sont réalisés sous forme de roues, et les moyens de prise au sol (3, 4) de l'essieu avant (7) sont réalisés sous forme de trains de roulement à chenilles.

5. Dispositif de commande (2) électronique d'une unité d'entraînement d'un véhicule selon une des revendications 1 à 4, **caractérisé en ce que** l'adaptation du rapport entre le couple d'entraînement transmis au sol par les moyens de prise au sol (3, 4) de l'essieu avant (7) et le couple d'entraînement transmis au sol par les moyens de prise au sol (5, 6) de l'essieu arrière (8) est effectuée en continu.

6. Dispositif de commande (2) électronique d'une unité d'entraînement d'un véhicule selon une des revendications 1 à 5, **caractérisé en ce que** le dispositif de commande (2) électronique commande l'unité d'entraînement de manière à ce que dans un virage, le couple d'entraînement transmis au sol par les moyens de prise au sol (5, 6) de l'essieu arrière (8) soit plus grand que le couple d'entraînement transmis au sol par les moyens de prise au sol (3, 4) de l'essieu avant (7).

7. Dispositif de commande (2) électronique d'une unité d'entraînement d'un véhicule selon une des revendications 1 à 6, **caractérisé en ce que** l'adaptation du rapport est effectuée par une consigne de volume absorbé (31, 32) pour les moteurs hydrauliques (18, 19, 20, 21).
